# EUROPÄISCHE PATENTANMELDUNG

(11) **EP 0 530 694 A1**
(43) Veröffentlichungstag der Anmeldung: **10.03.1993**
(21) Anmeldenummer: 92114709.6
(22) Anmeldetag: 28.08.1992
(51) Int. Cl.: C08F 299/02, C08F 299/06

(54) **Faserverstärkte Formmassen aus Vinylesterharzen**

(30) Priorität: 04.09.1991 DE 4129348
(71) Anmelder: BASF Aktiengesellschaft, D-67063 Ludwigshafen (DE)
(72) Erfinder: Cramer, Edwin, Dr., W-6700 Ludwigshafen (DE); Lorenz, Reinhard, Dr., W-6703 Limburgerhof (DE); Peter, Roland, Dr., W-6704 Mutterstadt (DE); Goffing, Friedrich, Dr., W-6710 Frankenthal (DE)

(57) **Zusammenfassung**

Die Erfindung betrifft faserverstärkte Formmassen aus ungesättigten Vinylesterharzen, die als Comonomer ein Acetoacetoxyalkyl(meth-)acrylat enthalten und praktisch frei von Styrol sind.

## Beschreibung

Die Erfindung betrifft faserverstärkte Formmassen aus styrolfreien ungesättigten Vinylesterharzen.

Die Herstellung und Verarbeitung von faserverstärkten Formmassen aus ungesättigten Vinylesterharzen (GFK) erfolgt größtenteils in offenen Systemen mit freiem Kontakt zur Umgebung. Beispielhaft seien genannt:
Das Handlaminieren, bei dem eine Fasermatte oder ein Gewebe in eine offene Form gelegt, dort mit flüssigem, härtbarem Harz getränkt und entlüftet wird; das Faserspritzen, bei dem flüssiges Harz und kleingeschnittene Fasern zusammen auf eine Formoberfläche gespritzt werden; das Wickelverfahren, bei dem ein harzgetränktes Faserbündel auf einen rotierenden Kern gewickelt wird; das Vakuumformen, bei dem Mattenzuschnitte auf eine offene Form gelegt, diese mit einer flexiblen Gegenform bedeckt, Harz injiziert und durch Vakuum eingezogen wird; die Prepreg-Herstellung, bei der Fasern und Harz zusammen auf ein Band aufgebracht und mittels Kalibrierwalzen zu einem flächigen Halbzeug geformt werden.

Handelsübliche ungesättigte Vinylesterharze enthalten in der Regel als copolymerisierbares Monomeres Styrol in Mengen von mehr als 25-45 Gew.-%. In jüngster Zeit hat es sich herausgestellt, daß Styrol, über längeren Zeitraum hinweg in größeren Mengen eingeatmet, zu gesundheitlichen Schäden führen kann. Aus diesem Grund wurde z.B. in der Bundesrepublik Deutschland 1987 die maximale Arbeitsplatzkonzentration an Styrol von 100 ppm auf 20 ppm gesenkt; auch in anderen Ländern sind ähnliche Tendenzen erkennbar. Bei den genannten Verarbeitungsverfahren kann der MAK-Wert nicht oder nur mit hohem Aufwand eingehalten werden. Es besteht daher das dringende Bedürfnis, bei der Herstellung von GFK-Teilen die Styrolemission von ungesättigten Vinylesterharzen zu verringern, bzw. das Styrol durch ein anderes, unbedenkliches Monomeres zu ersetzen.

Es wurde deshalb schon versucht, Acryl- oder Allyl-Monomere mit niedrigem Dampfdruck bei Raumtemperatur einzusetzen. Diethylenglykoldimethacrylat z.B. ergibt aber nach der Härtung spröde Formteile, Diallylphthalat zeigt insbesondere bei der Kalthärtung ein unbefriedigendes Härtungsverhalten, so daß lange Härtungszeiten oder hohe Temperaturen notwendig sind.

Der Erfindung lag also die Aufgabe zugrunde, styrolfreie ungesättigte Vinylesterharze zu entwickeln, die sich nach den üblichen Verfahren gut zu faserverstärkten Formmassen verarbeiten lassen und nach der Aushärtung Faserverbundwerkstoffe mit befriedigenden mechanischen Eigenschaften ergeben.

Es wurde nun gefunden, daß diese Aufgabe gelöst wird, wenn man als Monomeres ein Acetoxacetoxy-alkyl-(meth-)acrylat verwendet.

Gegenstand der Erfindung sind demzufolge faserverstärkte Formmassen aus ungesättigten Vinylesterharzen, enthaltend
- A.: 100 Gew.-Teile eines ungesättigten Vinylesters oder Vinylesterurethans,
- B.: 10-250 Gew.-Teile eines Monomeren,
- C.: 50-400 Gew.-Teile Verstärkungsfasern, sowie gegebenenfalls
- D.: weitere übliche Zusatzstoffe,
wobei die Komponente B mehr als 50 Gew.-% eines Acetoacetoxy-alkyl(meth-)acrylats und praktisch kein Styrol enthält.

Die DE-C 31 49 797 beschreibt die Verwendung einer härtbaren Zusammensetzung, die ein Acetoacetoxyalkyl(meth-)acrylat enthält, als Reaktivklebstoff. Diese Monomeren sollen das sonst übliche Methylmethacrylat, welches für viele Anwendungszwecke einen zu hohen Dampfdruck aufweist, ersetzen. Neben vielen anderen möglichen Additiven können die Reaktivklebstoffe auch styroliserte ungesättigte Polyesterharze in untergeordneten Mengen enthalten. Verstärkungsfasern als Zusatzstoffe sind nicht erwähnt. Darüber hinaus sind die Probleme, die bei der Herstellung von glasfaserverstärkten Formmassen auftreten, grundsätzlich verschieden von den Problemen bei der Verarbeitung von Reaktivklebstoffen.

Vinylesterharze im Sinne der Erfindung sind ungesättigte Vinylester (VE-Harze) und ungesättigte Vinylesterurethane (VU-Harze).

Kennzeichnend für ungesättigte Vinylester ist die Gruppe 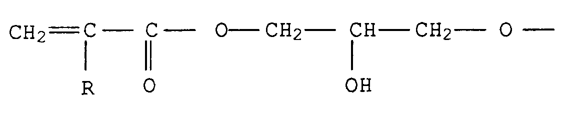
mit R=H oder CH₃.

Unter VE-Harzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Geeignet im Sinne der Erfindung sind auch säuremodifizierte Vinylesterharze. Hierzu werden die freien Hydroxylgruppen der VE-Harze teilweise mit Anhydriden wie Maleinsäureanhydrid oder Phthalsäureanhydrid verestert. Man erhält in diesem Fall säuregruppenhaltige Vinylesterharze.

Ungesättigte Vinylesterurethane sind bekannt, z.B. aus US-A 3 297 745, US-A 3 772 404, US-A 4 618 658, GB-A 2 217 722 und DE-A 37 44 390. Sie weisen im allgemeinen folgende Gruppen auf:
a) 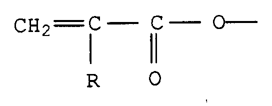 (mit R = H oder CH₃)
b) 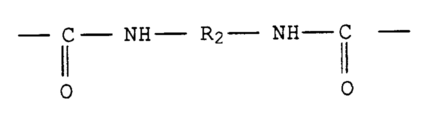 (mit R₂ = zweiwertiger aliphatischer, aromatischer oder cycloaliphatischer Rest mit 4 bis 40 C-Atomen, vorzugsweise ein aromatischer Rest mit 6 bis 20 C-Atomen),
gegebenenfalls
c) -OR₃-O-
   (mit R₃ = zweiwertiger aliphatischer, cycloaliphatischer oder aromatischer Rest mit 2 bis 500 C-Atomen, vorzugsweise ein aliphatischer Rest mit 4 bis 100 C-Atomen),
sowie gegebenenfalls
d) -NH-R₄-NH-
   (mit R₄ = aliphatischer, cycloaliphatischer oder aromatischer Rest mit 2 bis 100 C-Atomen).

Vorzugsweise ist das VU-Harz ein Umsetzungsprodukt aus
- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,
wobei bei der Umsetzung das Gewichtsverhältnis Isocyanat: (Alkohol + Amin) zwischen 100:0 und 100:300 betrug und das Äquivalentverhältnis Hydroxyalkyl(meth)acrylat zu den freien Isocyanatgruppen des Umsetzungsproduktes zwischen 3:1 und 1:2 lag.

Die erfindungsgemäßen Formmassen enthalten auf 100 Gew.-Teile des ungesättigten Vinylesters A 10-250, vorzugsweise 30-120 Gew.-Teile Monomere B, die zu mehr als 50 Gew.-% aus einem Acetoacetoxyalkyl-(meth-)acrylats bestehen. Bevorzugt sind Acetoacetoxyethyl- und Acetoacetoxypropyl-methacrylat. Daneben können bis zu 50, vorzugsweise weniger als 10 Gew.-% anderer, insbesondere hochsiedender Comonomerer anwesend sein, z.B. Trimethylolpropantriacrylat und -methacrylat, Diallylphthalat, Allylphenole und Allylphenolether, sowie N-Phenylmaleinimid und N-Alkylmaleinimide.

Die Formmassen enthalten praktisch kein Styrol, wobei die Anwesenheit verschwindend geringer Mengen, vorzugsweise von weniger als 1, insbesondere weniger als 0,1 Gew.-Teilen nicht ausgeschlossen werden soll.

Die Formmassen enthalten ferner 50-400, vorzugsweise 100 bis 300 Gew.-Teile Verstärkungsfasern C. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern oder als gemahlenene Fasern vorliegen, als Langfasern in Form von Einzelrovings, Bahnen aus parallelen Rovings, Gelege aus orientierten Fasern, Fasermatten, Faservliese, Fasergewebe oder Fasergewirke, bevorzugt aber als geschnittene Rovings eine Länge von bis zu 5 cm.

Darüber hinaus können die Formmassen weitere übliche Zusatzstoffe D enthalten:
Zur Schrumpfkompensation kann ein thermoplastisches Polymerisat in Mengen von 1 bis zu 100, vorzugsweise von 10 bis 30 Gew.-Teilen, bezogen auf 100 Gew.-Teile A enthalten sein. Als thermoplastische Polymere kommen z.B. Polystyrol, schlagfest modifiziertes Polystyrol, Polymethylmethacrylat, Polyvinylacetat, Ethylenvinylacetatcopolymer und entsprechende Copolymere und Pfropfcopolymere in Frage. Es eignen sich auch gesättigte Polyester und thermoplastische Polyurethane. Ebenfalls geeignet sind kautschukartige Blockcopolymere, insbesondere solche aus 40 bis 95 Gew.-% eines Diolefins, z.B. Butadien, Isopren oder Chloropren, und 60 bis 5 Gew.-% eines Vinylaromaten, z.B. Styrol oder p-Methylstyrol, sowie Kern-Schale-Kautschuke auf Basis von Acrylaten und Methacrylaten.

Werden aus den faserverstärkten Formmassen flächige SMC-Massen hergestellt, dann liegen diese in eingedickter Form vor. Zum Eindicken werden die üblichen Eindickmittel, z.B. Oxide und Hydroxide des Magnesiums oder Calciums verwendet, ferner Isocyanate, gegebenenfalls zusammen mit Aminen. Sie werden in Mengen von 0,2 bis 10 Gew.-Teilen, bezogen auf 100 Teile A, eingesetzt.

Weiter enthalten die Harze 0,01 bis 5, vorzugsweise 0,5 bis 3 Gew.-Teile, bezogen auf 100 Gew.-Teile A, eines Polymerisationsinitiators. Als Polymerisationsinitiatoren werden übliche, bei Temperaturen oberhalb von 50°C in Radikale zerfallende Peroxide eingetzt. Ihre Halbwertzeit bei 50°C soll vorzugsweise größer als 100 h sein. In Frage kommen Diacylperoxide, Peroxydicarbonate, Peroxyester, Perketale, Ketonperoxide, Hydroperoxide und Dialkylperoxide, sowie Azoverbindungen und C-C-labile Verbindungen. Setzt man den peroxid-initiierten Formmassen übliche Polymerisationsbeschleuniger, wie z.B. Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroxperoxide, bzw. Benzoylperoxide zum Einsatz kommen. Bei Verwendung üblicher Lichtinitiatoren, wie z.B. Benzoinether, Benzilketalen oder Acylphosphinverbindungen kann die Härtung durch Bestrahlen mit Licht der Wellenlänge 200 bis 500 nm durchgeführt werden.

Weitere Zusatzstoffe sind Füllstoffe in Mengen von 0 bis 300 Gew.-Teilen, wie Kreide, Kaolin, Quarzmehl, Talkum und Aluminiumoxidhydrat, ferner übliche Inhibitoren, insbesondere Phenole, Chinone oder Nitrosoverbindungen, Gleitmittel, wie z.B. Wachse, Paraffine zur Vermeidung der Verdunstung der Monomeren an der Oberfläche, sowie Flammschutzmittel und Formtrennmittel.

Die faserverstärkten Formmassen können nach dem eingangs geschilderten Verfahren zu faserverstärkten Bauteilen verarbeitet werden, die z.B. als Automobilteile, wie SMC- oder BMC-Formteile, Blattfedern, Kardanwellen eingesetzt werden können. Daneben können die Formmassen auch als Prepregharze für Anwendungen in der Sport- und Freizeitindustrie verwendet werden.

Sowohl bei der Herstellung als auch bei der Verarbeitung der erfindungsgemäßen Formmassen treten die mit Styrol zusammenhängenden Belästigungen und Gefährdungen nicht auf. Die erhaltenen GFK-Formteile weisen in ihren Gebrauchseigenschaften gegenüber herkömmlichen Formteilen auf Basis von styrolhaltigen Formmassen praktisch keine Nachteile auf.

### Beispiel

a) Herstellung eines Vinylesterurethanharzes
   260 g Diphenylmethandiisocyanat und 1 ml Dibutylzinndilaurat werden in 580 g 2-Acetoacetoxyethyl-methacrylat gelöst. Zu dieser Lösung werden unter Rühren bei 40°C 20 g bisethoxiliertes Bisphenol A und 25 g Bis-(3-amino-propyl)-poly-tetrahydrofuran der Molmasse 1000 gegeben, wobei die Innentemperatur etwas ansteigt. Danach werden bei 50°C 280 g Hydroxypropylmethacrylat zugetropft. Nach beendeter Zugabe wird auf 70°C aufgeheizt und 1 Stunde bei dieser Temperatur nachgerührt. Das abgekühlte Harz wird mit 300 ppm Hydrochinon stabilisiert.
b) Herstellung eines Faserverbundwerkstoffs
   Eine 4 mm dicke Platte aus glasfaserverstärktem Vinylesterurethanharz wurde folgendermaßen hergestellt: Das nach a) hergestellte Harz wurde mit 2 Gew.-% Benzoylperoxid und 1 Gew.-% N,N-Dimethyl-para-toluidin versetzt, Glasmatten damit getränkt und im Handlaminierverfahren übereinander geschichtet. Das Laminat wurde in einer Presse bei 80°C für 30 Minuten verpreßt und 6 Stunden bei 100°C nachgehärtet. Das Laminat hatte einen Glasgehalt von 35 Gew.-%, die Biegefestigkeit lag bei 220 N/mm², die Randfaserdehnung wurde zu 3 % bestimmt.

## Patentansprüche

1. Faserverstärkte Formmassen aus ungesättigten Vinylesterharzen, enthaltend
A. 100 Gew.-Teile eines endständig ungesättigten Vinylesters,
B. 10 - 250 Gew.-Teile eines Monomeren,
C. 50 - 400 Gew.-Teile Verstärkungsfasern, sowie gegebenenfalls
D. weitere übliche Zusatzstoffe,
dadurch gekennzeichnet, daß die Komponente B mehr als 50 Gew.-% eines Acetoacetoxy-alkyl-(meth-)acrylats und praktisch kein Styrol enthält.

2. Formmassen nach Anspruch 1, dadurch gekennzeichnet, daß der ungesättigte Polyester A ein Vinylester ist.

3. Formmassen nach Anspruch 1, dadurch gekennzeichnet, daß der ungesättigte Polyester A ein Vinylesterurethan ist.

4. Formmassen nach Anspruch 1, dadurch gekennzeichnet, daß sie weniger als 1, vorzugsweise weniger als 0,1 Gew.-% Styrol enthalten.

5. Formmassen nach Anspruch 1, dadurch gekennzeichnet, daß sie 1 bis 100 Gew.-Teile, bezogen auf A, eines thermoplastischen Polymeren enthalten.

6. Bauteile, insbesondere Automobilteile, hergestellt durch Härten der Formmassen nach Anspruch 1.
